# EUROPÄISCHE PATENTSCHRIFT

(11) **EP 0 282 786 B1**
(45) Veröffentlichungstag und Bekanntmachung des Hinweises auf die Patenterteilung: **23.06.1993**
(21) Anmeldenummer: 88102802.1
(22) Anmeldetag: 25.02.1988
(51) Int. Cl.: B23B 31/02

(54) **Kupplungsanordnung zum drehfesten biegesteifen Verbinden von miteinander zu verbindenden Teilen**
Coupling device for connecting pieces rotationally
Dispositif d'accouplement pour pièces rotatives à connecter

(30) Priorität: 18.03.1987 DE 3708746
(43) Veröffentlichungstag der Anmeldung: 21.09.1988
(73) Patentinhaber: UTILIS Müllheim AG, CH-8555 Müllheim (CH)
(72) Erfinder: Eckle, Otto, D-7121 Löchgau (DE)
(74) Vertreter: Rüger, Rudolf, Dr.-Ing.

(56) Entgegenhaltungen:
- EP-A- 0 281 760
- DE-C- 3 108 439
- DE-C- 3 406 498
- US-A- 2 639 931
- US-A- 2 872 227

## Beschreibung

Die Erfindung geht aus von einer Kupplungsanordnung zum drehfesten und biegesteifen Verbinden von miteinander zu kuppelnden, eine gemeinsame Achse aufweisenden Teilen, wie Wellen und Werkzeugen, miteinander bzw. untereinander mit den Merkmalen des Oberbegriffs des Anspruches 1.

Bei einer gattungsgemäßen Anordnung dieser Art nach der DE-PS 3 108 439 handelt es sich um die Verbindung zwischen einem genormten Steilkegel und einer Bohrstange, die mit Hilfe des Steilkegels in einer entsprechenden Steilkegelaufnahme einer Maschinenspindel zu befestigen ist. Der Steilkegel enthält die Paßbohrung sowie die eine dazu rechtwinklig verlaufende Querbohrung, die von der Paßbohrung in zwei Abschnitte aufgeteilt ist. Beide Querbohrungsabschnitte enthalten Innengewinde, in die das als Schraube ausgebildete Widerlagerglied und das ebenfalls als Schraube ausgebildete Vorspannglied eingeschraubt sind. Sowohl das Vorspannglied als auch das Widerlagerglied enthalten in ihren der Paßbohrung benachbarten Stirnseiten kegelförmige Ausnehmungen, die koaxial zueinander und zu der Achse der Querbohrung sind.

Der Paßzapfen ist einstückig an der Rückseite der Bohrstange koaxial zu deren Drehachse angeformt und von einer planen ringförmigen Anlagefläche umgeben, die mit einer ebenfalls planen ringförmigen Fläche an dem Steilkegel zusammenwirkt, die die Paßbohrung umgibt. Der Paßzapfen enthält etwa auf seiner halben Länge eine Querbohrung, die die Drehachse der Bohrstange rechtwinklig schneidet und deren Achse von der Anlagefläche der Bohrstange einen geringfügig kleineren Abstand aufweist als die Querbohrung in dem Steilkegel von der dortigen Anlagefläche. In der Querbohrung des Paßzapfens sitzt das Spannelement in Gestalt eines glatten zylindrischen Bolzens, der an beiden Stirnseiten kegelstumpfförmige Spitzen trägt, die mit den kegelstumpfförmigen Ausnehmungen in dem Vorspannglied und dem Widerlagerglied zusammenwirken. Durch Einschrauben des Vorspanngliedes kommt dessen kegelförmige Ausnehmung mit der benachbarten kegelstumpfförmigen Spitze des Spannbolzens in Eingriff, wobei der Spannbolzen in Richtung auf das Widerlagerglied vorgeschoben wird, wenn das Vorspannglied weiter eingeschraubt wird. Hierbei kommt schließlich auch die andere kegelstumpfförmige Spitze des Spannbolzens mit der kegelförmigen Ausnehmung des Widerlagergliedes in Eingriff. Da die Achse des Spannbolzens gegenüber der Achse der Querbohrung in dem Steilkegel geringfügig in Richtung auf die Anlageflächen versetzt ist, wird beim Anziehen des Vorspanngliedes der Spannbolzen von der Anlagefläche weggezogen, wodurch wegen der Verbindung mit dem Paßzapfen die Anlageflächen von Steilkegel und Bohrstange aneinander gepreßt werden.

Tritt wegen der Schnittbelastung der Bohrstange ein Drehschlupf zwischen dem Steilkegel und der Bohrstange auf, erhöht sich die Verspannkraft zwischen den beiden Teilen, weil die kegelstumpfförmigen Spitzen des Spannbolzens in den kegelförmigen Ausnehmungen aufzusteigen versuchen. Die Anordnung weist deswegen eine sich bei Schnittbelastung erhöhende Spannkraft auf. Der Drehmomentanteil, der bei Belastung durch Reibung übertragen wird, steigt an. Sie ist in der Lage, sehr hohe Drehmomente weitgehend biegesteif zu übertragen.

Es wurde deswegen, wie die DE-PS 3 406 498 zeigt, auch bereits dazu übergangen, die Paßbohrung unmittelbar in der Maschinenspindel anzubringen, um den Steilkegel als Verbindungsglied zwischen Maschinenspindel und Werkzeug einzusparen.

Darüber hinaus ist es aus der Praxis bekannt, die Anordnung umzukehren, insofern als das Werkzeug die Paßbohrung enthält, während die Maschinenspindel bzw. der Steilkegel den einstückigen Paßzapfen tragen.

Ungünstig hierbei ist, daß der Verwender der einen Werkzeugart auf die entsprechende Spindelbauweise bzw. Steilkegelbauweise festgelegt ist und die Hersteller von Werkzeugmaschinen,Steilkegeln und Werkzeugen beide Arten bereithalten müssen, nämlich solche, die die Paßbohrung aufweisen und solche, die den einstückigen Paßzapfen tragen.

Obgleich bei allen Ausführungsformen die Seitensteifigkeit der Verbindung sehr hoch ist, haben sich dennoch Ungleichförmigkeiten beim Fräsen mit Werkzeugen großer Ausladung gezeigt, deren Ursache in unterschiedlicher Seitensteifigkeit liegt, wenn die Verbindung mit großen Radialkräften belastet wird.

Greift die Radialkraft parallel zu den Achsen der Querbohrung an, so ist sie bestrebt, Werkzeug und Aufspannung gegeneinander um eine Achse zu biegen, die durch den Rand der miteinander in Eingriff stehenden Anlageflächen verläuft. Die dabei entstehende Reaktionskraft wird dagegen vom, bezogen auf die Drehachse, abliegenden Ende des Spannbolzens aufgenommen. Folglich liegt auch die Kraftangriffsstelle nicht auf, sondern radial hinter der Drehachse. Tritt hingegen die Radialkraft in einer Richtung senkrecht zu den Achsen der Querbohrung auf, entstehen im Unterschied zu vorher andere Krafteinleitungsverhältnisse. Die Schwenkachse, um die die beiden Teile gegeneinander geknickt werden sollen, liegen zwar wiederum auf einer Achse, die durch den Rand der beiden Anlageflächen verläuft, doch die Reaktionskraft wird nun nicht mehr, bezogen hierauf hinter der Drehachse aufgenommen, sondern weil der Spannbolzen parallel zu dieser "Knickachse" verläuft, in einer Ebene, die die Drehachse enthält. Damit ergeben sich unterschiedliche Hebelarmverhältnisse und auch unterschiedliche Biegefestigkeiten, je nach dem, ob die Radialkraft aus der einen oder der anderen Richtung angreift. Beim Fräsen nun scheint die Radialkraft um die Verbindungsstelle umzulaufen und, obwohl an der Verbindungsstelle immer gleiche Biegemomente auftreten, entsteht eine periodisch schwankende Biegesteifigkeit, die zu Schwingungen im System führen kann.

Ausgehend hiervon ist es Aufgabe der Erfindung, eine Kupplungsanordnung zum drehfesten und biegesteifen Verbinden von Wellen und Werkzeugen untereinander bzw. Wellen und Werkzeugen miteinander zu schaffen, bei der keine Einschränkungen hinsichtlich der Paarungen bestehen.

Diese Aufgabe wird erfindungsgemäß durch die Kupplungsanordnung mit den Merkmalen des Hauptanspruches gelöst.

Weil beide Teile Paßbohrungen enthalten, können solchermaßen hergestellte Werkzeuge und Wellen ohne weiteres mit bestehenden Einrichtungen verbunden werden, unabhängig davon, ob diese mit einem einstückig angeformten Paßzapfen oder mit Paßbohrung ausgeführt sind. Herstellerseitig braucht deswegen nur noch eine Art von Werkzeugen, nämlich solche mit Paßbohrung gefertigt werden. Auch der Hersteller von Werkzeugmaschinen ist insoweit frei , wobei mit der neuen Kupplungsanordnung versehene Maschinen und Werkzeuge kompatibel sind mit bestehenden Einrichtungen. Wegen des losen Paßzapfens können in die Anlageflächen leicht radial verlaufende Federnuten, Paßfedern od.dgl. eingearbeitet werden.

Wenn die Querbohrungen in dem Paßzapfen gekreuzt angeordnet sind, ergeben sich bei einer umlaufenden Radialkraft, die ein um die Verbindungsstelle umlaufendes Biegemoment hervorruft, nahezu konstante Verhältnisse der Biegesteifigkeit, weil in beiden Extremlagen einer der Spannbolzen rechtwinklig und der andere parallel zu der angreifenden Radialkraft verläuft. Die Biegesteifigkeit der Anordnung wird deswegen in einem wesentlich engeren Bereich schwanken, als wenn der Paßbolzen mit einem der Teile einstückig verbunden wäre.

Außerdem ist es unter Anwendung der neuen Kupplungsanordnung möglich, sehr lange Wellen, beispielsweise Bohrstangen u.dgl., aus Einzelteilen zusammenzusetzen, wobei jede Kupplungsstelle schwingungsdämpfend wirkt.

Wenn der Paßzapfen in wenigstens einer oder nur einer Paßbohrung mit Haftsitz sitzt, ist der Paßzapfen in dieser Paßbohrung unverlierbar gehaltert und er verliert seinen zentrischen Sitz auch dann nicht, wenn die beiden Teile im Bereich der Kupplungsanordnung voneinander getrennt werden.

Die Kupplungsanordnung zeigt unter Belastung durch ein Drehmoment bezüglich der Mittelachse der beiden Teile einen gewissen Drehschlupf der beiden Teile gegeneinander, der bei verschwindendem Drehmoment reversibel ist. Dieser Drehschlupf, der den Azimutwinkel der beiden Teile gegeneinander verstellt, kann je nach Anwendung vorteilhaft oder störend sein. Vorteilhaft ist der Drehschlupf beispielsweise, wenn eines der Teile einen Bohrer od.dgl. darstellt, weil dann bei einem auftretenden Festfressen des Bohrers der Drehschlupf ausreicht, um bis zum Abschalten des Antriebs einen langsameren Kraftanstieg zu erzeugen, verglichen mit dem Fall, in dem beide Teile praktisch ohne Drehschlupf miteinander verbunden sind. Dementsprechend wird der Antrieb und auch die Lagerung geschont.

Bei bestimmten Anwendungen soll unter Belastung möglichst keinerlei Verdrehung zwischen den beiden Teilen auftreten, was eine möglichst schlupfarme Kupplung der Teile erzwingt. Ein Anwendungsfall dieser Art liegt beispielsweise vor, wenn die Schneidecke eines Bohrers zum Drehen verwendet wird. Ein Verdrehen der miteinander gekuppelten Teile gegeneinander würde einen Versatz der Schneidecke und damit eine Durchmesseränderung beim bearbeiteten Werkstück hervorrufen.

Bei der neuen Kupplungsanordnung läßt sich der Drehschlupf, den die beiden Teile gegeneinander unter Belastung zeigen, sehr einfach dadurch verändern, daß die Längsachsen der Querbohrungen in dem Paßzapfen um einen mehr oder weniger großen Betrag kleiner sind als der Abstand der Längsachsen in den Querbohrungen der beiden miteinander zu kuppelnden Teile. Je nachdem, wie die Abstandsdifferenz gewählt wird, haben die Spannelemente einen unterschiedlich großen Weg zur Verfügung, um unter Belastung in den Kegelpfannen radial bzw. seitlich auszuwandern.Je genauer der Achsabstand der Querbohrungen in dem Paßzapfen an den Achsabstand der Querbohrungen in den beiden zu kuppelnden Teilen herankommt, umso kleiner ist der mögliche Drehschlupf.

In der Zeichnung ist ein Ausführungsbeispiel des Gegenstandes der Erfindung dargestellt. Es zeigen:
- Fig. 1: zwei durch eine Kupplungsanordnung gemäß der Erfindung miteinander verbundene Teile in einem Längsschnitt,
- Fig. 2: die Kupplungsanordnung nach Fig. 1 in einer Draufsicht als Phantomdarstellung,
- Fig. 3: einen Paßbolzen für die Kupplungsanordnung nach Fig. 1 mit achsparalleler Anordnung der Querbohrungen,
- Fig. 4: einen Paßbolzen für die Kupplungsanordnung nach Fig. 1 mit gekreuzter Anordnung der Querbohrungen zum Kuppeln von Teilen, bei denen die Paßbohrung unterschiedlichen Durchmesser aufweist und
- Fig. 5: eine schematische Darstellung des Sitzes eines Spannelementes in dem zugehörigen Widerlager bei unterschiedlicher Abstandsdifferenz zwischen den Achsen der Querbohrung in dem Paßzapfen und den Achsen der Querbohrungen in den beiden Teilen.

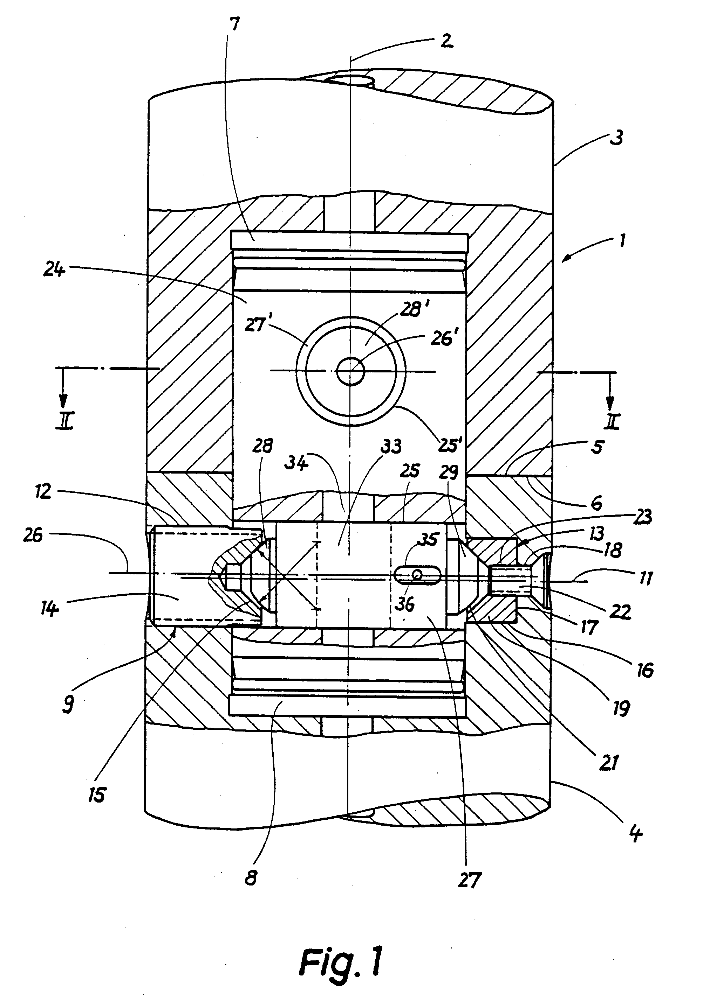

Fig. 1 zeigt im Querschnitt eine Kupplungsanordnung 1 zum drehfesten und biegesteifen Verbinden zweier eine gemeinsame Achse oder Drehachse 2 aufweisender Teile 3 und 4. Die Teile 3 und 4 können rotierende oder stillstehende Wellen , Werkzeuge oder andere Maschinenteile sein. So ist es beispielsweise möglich, daß die Teile 3 und 4 zwei miteinander zu kuppelnde Wellenstümpfe oder das eine Teil ein Fräser, eine Bohrstange od.dgl. und das andere Teil eine Werkzeugmaschinenspindel ist. Die gezeigten zylindrischen Teile 3 und 4 sind deswegen nur stellvertretend für alle denkbaren miteinander zu kuppelnden Maschinenteile, wobei das Drehmoment biegesteif von dem einen auf das andere Teil 3, 4 zu übertragen ist.

Beide Teile 3 und 4 weisen jeweils eine plane Anlagefläche 5 und 6 auf, die jeweils rechtwinklig zu der Drehachse 2 verläuft. Diese beiden Anlageflächen 5 und 6 stoßen stumpf aneinander.

In dem Teil 3 ist eine zu der Drehachse 2 konzentrische, als Sackbohrung ausgeführte Paßbohrung 7 enthalten, die die Anlagefläche 5 durchsetzt, so daß diese eine kreisringförmige Gestalt aufweist. Die Paßbohrung 7 ist zylindrisch und glattwandig.

Eine weitere Paßbohrung 8, die ebenfalls zylindrisch und glattwandig ist, ist in dem Teil 4 enthalten. Die dort befindliche Paßbohrung 8 ist wiederum als zu der Drehachse 2 konzentrische Sackbohrung ausgeführt und durchsetzt die Anlagefläche 6, die deswegen eine kreisringförmige Gestalt bekommt. Beide Paßbohrungen 7 und 8 haben denselben Durchmesser und dieselbe Tiefe, gemessen ab der jeweils zugehörigen Anlagefläche 5, 6.

Zwischen der Anlagefläche 6 und dem innenliegenden Ende der Paßbohrung 8 enthält das Teil 4 eine Querbohrung 9, deren Achse 11 die Drehachse 2 rechtwinklig schneidet. Die Querbohrung 9 ist als Stufenbohrung ausgebildet und durchsetzt das Teil 4 zu beiden Seiten der Paßbohrung 8. Mit anderen Worten, die Querbohrung 9 wird durch die Paßbohrung 8 in die Abschnitte 12 und 13 aufgeteilt. Von diesen enthält der Abschnitt 12 ein Innengewinde zur Aufnahme einer mit einem Außengewinde versehenen und als Stiftschraube ausgeführten Druckschraube 14, die von der Außenseite der Querbohrung 9 her zu betätigen ist. An ihrer innenliegenden Stirnseite enthält die Druckschraube 14 eine zu der Achse 11 konzentrische kegelstumpfförmige Ausnehmung 15, die sich in Richtung auf die Drehachse 2 bzw. die Paßbohrung 8 hin erweitert.

Der Abschnitt 13 der Querbohrung 9 besteht aus einem Teil 16 mit großem Durchmesser, der über eine plane Ringschulter 17 in einen Teil 18 mit kleinem Durchmesser übergeht. In dem Teil 16 steckt ein außen zylindrisches Druckstück 19 mit einer kegelstumpfförmigen Ausnehmung 21, deren Abmessungen den Abmessungen der kegelstumpfförmigen Ausnehmung 15 entsprechen und die sich ebenfalls in Richtung auf die Paßbohrung 8 erweitert. Gehalten wird das Druckstück 19 mittels einer Senkkopfschraube 22, die in dem Teil 18 des Bohrungsabschnittes 13 steckt und in eine Gewindebohrung 23 des Druckstückes 19 eingeschraubt ist.

Eine identisch aufgebaute und angeordnete Querbohrung 9ʹ ist auch in dem Teil 3 zu finden, weshalb zur Bezeichnung der Bauteile von dessen Querbohrung 9ʹ als Bezugszeichen dieselben Zahlen wie im Zusammenhang mit der Querbohrung 9 verwendet sind, wobei lediglich zur Unterscheidung ein Apostroph angehängt ist. Da der einzige Unterschied zwischen den beiden Bohrungen 9 und 9ʹ darin besteht, daß die eine in dem Teil 4 und die andere in dem Teil 3 enthalten ist, erübrigt sich eine erneute Beschreibung.

In dem von den beiden miteinander fluchtenden Paßbohrungen 7 und 8 begrenzten Raum sitzt ein zylindrischer, außen glattwandiger Paßzapfen 24, über den die beiden Teile 3 und 4 zusammengehalten werden. Der Paßzapfen 24 weist zwei mit Abstand voneinander und rechtwinklig angeordnete Querbohrungen 25, 25ʹ auf, deren Achsen 26 und 26ʹ die Längsachse des Paßzapfens 24 und damit die Drehachse 2 rechtwinklig schneiden. Sie sind durchgehend zylindrisch glattwandig und haben denselben Durchmesser. Der Abstand, den deren Achsen 26 und 26ʹ voneinander haben, ist geringfügig kleiner als der Abstand, den die beiden Achsen 11 und 11ʹ der Querbohrungen in den Teilen 3 und 4 voneinander aufweisen, wenn die beiden Teile 3 und 4 mit ihren Anlageflächen 5 und 6 aufeinander liegen; die Achsen 11 und 11ʹ sind gleichzeitig die Achsen der kegelstumpfförmigen Ausnehmungen 15 und 21 bzw. 15ʹ und 21ʹ.

In der Querbohrung 25 sitzt als Spannglied ein zylindrischer Bolzen 27,der an seinen beiden Stirnseiten kegelstumpfartige Fortsätze 28 und 29 trägt, deren Achse ebenfalls die Achse 26 ist. Beide Fortsätze 28 und 29 sind untereinander gleich und verjüngen sich in Richtung von den Stirnseiten des Bolzens 27 weg. Die Erzeugende der kegelstumpfförmigen Fortsätze mit nach außen konvexer Mantelfläche ist ein Kreisbogen, der derart verläuft, daß in jeder die Achse 26 enthaltenden Schnittebene durch die kegelstumpfförmigen Fortsätze 28 und 29 der Mittelpunkt des zu dem Kreisbogen gehörenden Kreises, bezogen auf die Achse 26, auf der anderen Seite liegt wie die durch die Schnittebene erzeugte Mantellinie.

Damit der Paßbolzen 24 ungehindert in die Paßbohrung 7 bzw. 8 eingeschoben werden kann, ist die über die beiden Fortsätze 28 und 29 gemessene Länge des Spannbolzens 27 geringfügig kleiner als der Durchmesser des Paßbolzens 24. Im gespannten Zustand wirken die beiden Fortsätze 28 und 29 mit den kegelstumpfförmigen Ausnehmungen oder Kegelpfannen 15 und 21 zusammen, in denen sie, wie Fig. 1 zeigt, zu liegen kommen.

In der Querbohrung 25ʹ steckt ein weiterer Spannbolzen 27ʹ, der denselben Aufbau und dieselben Abmessungen aufweist wie der Spannbolzen 27. Der Spannbolzen 27ʹ wirkt mit den kegelstumpfförmigen Ausnehmungen oder Kegelpfannen 15ʹ und 21ʹ zusammen.

Die Kupplungsanordnung 1 wird wie folgt zusammengesetzt: Nach Einsetzen des Spannbolzens 27 in die Querbohrung 25 wird der Paßzapfen 24 in die Paßbohrung 8 eingeschoben, nachdem vorher noch die Druckschraube 14 so weit zurückgedreht worden ist, bis ihre innenliegende Stirnseite mit der kegelstumpfförmigen Ausnehmung 15 hinter der Wand der Paßbohrung 8 zurücksteht. Der Paßbolzen 24 wird so weit in die Paßbohrung 8 eingeschoben, bis seine Querbohrung 25 ungefähr mit der Querbohrung 9 fluchtet. Nun kann die Druckschraube 14 wieder eingeschraubt werden, wobei ihr innenliegendes Ende mit dem benachbarten Fortsatz 28 des Spannbolzens 27 in Eingriff kommt. Beim weiteren Einschrauben der Druckschraube 14 in Richtung auf das Druckstück wird der Spannbolzen 27 vorgeschoben, wobei gleichzeitig die Druckschraube 14 mehr oder weniger tief in die Querbohrung 25 eingreift. Beim Anziehen der Druckschraube 14 zentrieren sich die kegelstumpfförmigen Fortsätze 28 und 29 selbsttätig in den kegelstumpfförmigen Ausnehmungen 15 und 21, wobei sie mit einer entsprechenden Kraft an die Wände der Ausnehmungen 15 und 21 angepreßt werden.

Sobald der Paßzapfen 24 solchermaßen in dem Teil 4 fixiert ist, wiederholt sich der entsprechende Vorgang mit dem Teil 3 und dem in der Querbohrung 25ʹ enthaltenen Spannelement 27ʹ. Da aber der Abstand der beiden Querbohrungen 17 und 27ʹ voneinander um 0, 1 mm bis 0,5 mm kleiner ist als der Abstand der Querbohrungen 9 und 9ʹ, wenn die Anlageflächen 5 und 6 aneinander anliegen, entsteht an den Schrägflächen der Fortsätze 28, 28ʹ, 29, 29ʹ beider Spannbolzen 27, 27ʹ in Verbindung mit den Schrägflächen der kegelstumpfförmigen Ausnehmungen 15, 21, 15ʹ und 21ʹ eine Kraftkomponente beim Anziehen der Druckschraube 14ʹ, die in Richtung parallel zu der Drehachse 2 verläuft und damit die Anlageflächen 5 und 6 aufeinanderpreßt.

Die Anpreßkraft wird verstärkt, wenn über die Kupplungsanordnung 1 ein Drehmoment übertragen wird, das die Reibkraft zwischen den reibschlüssig miteinander gekuppelten Anlageflächen 5 und 6 überwindet und eine Verdrehung der Teile 3 und 4 gegeneinander bewirkt. Dabei wird der Spannbolzen 27 bzw. 27ʹ entsprechend mitgenommen und er neigt dazu, in den kegelstumpfförmigen Ausnehmungen 15 und 21 bzw. 15ʹ und 21ʹ nach der Seite hin auszuweichen und damit von der Anlagefläche 5, 6 sich wegzubewegen, in der er ein Spiel in Richtung parallel zu der Drehachse 2 aufweist. Da hierdurch eine weitere Verkürzung zustandekommt, erhöht sich entsprechend die auf die beiden Anlageflächen 5, 6 wirkende Anpreßkraft. Wegen des im unteren, d.h. den Anlageflächen 5, 6 benachbarten Bereich geringen Anstiegs der kegelstumpfförmigen Ausnehmungen 15, 21 bzw. 15ʹ bzw. 21ʹ ist dieser Verstärkungseffekt sehr groß.

Die gezeigte Kupplungsanordnung 1 weist eine sehr gleichmäßige Biegesteifigkeit, bezogen auf den Azimutwinkel um die Drehachse 2 auf. Es sei zunächst angenommen, daß eine Radialkraft auf das Teil 4 senkrecht zu der Achse 26 einwirkt. Das hierdurch auftretende Biegemoment will die beiden Teile 3 und 4 um eine Achse knicken, die parallel zu der Achse 26 läuft und durch den Rand der beiden Anlageflächen 5 und 6 läuft. Die Gegenkraft wird dann von den beiden Fortsätzen 28, 29 auf der Achse 26 aufgenommen, d.h. der Abstand der beiden Querkräfte, die das Biegemoment aufnehmen, ist gleich dem Radius der beiden Anlageflächen 5 und 6. Die sinngemäß gleichen geometrischen Verhältnisse gelten, wenn die Querkraft rechtwinklig zu der Achse 26ʹ angreift, da dann die Querkräfte im ungünstigsten Fall von dem Spannbolzen 27ʹ aufgenommen werden müssen. Auch in diesem Falle ist der Abstand der das Biegemoment aufnehmenden Querkräfte, die parallel zu der Drehachse 2 wirken, gleich dem Radius der Anlageflächen 5 und 6. Die größte Steifigkeit tritt auf, wenn die Querkraft unter einem Winkel von 45° zu den beiden Achsen 26 und 26ʹ auftritt, weil dann, wie leicht einzusehen ist, die Reaktionskraft hinter der Drehachse 2 angreift. Der Abstand der Querkräfte ist hierbei gleich dem Radius der Anlageflächen 5, 6 zuzüglich etwa der halben Länge des Spannbolzens 27 bzw. 27ʹ mal 0,7.

Die Kupplungsanordnung 1 gibt deswegen einen besseren Verlauf der Biegesteifigkeit, verglichen mit einer Kupplungsanordnung, bei der der Paßzapfen 24 mit einem der Teile 3, 4 einstückig verbunden ist. In diesem Falle wäre die Schwankung der Biegesteifigkeit wesentlich größer.

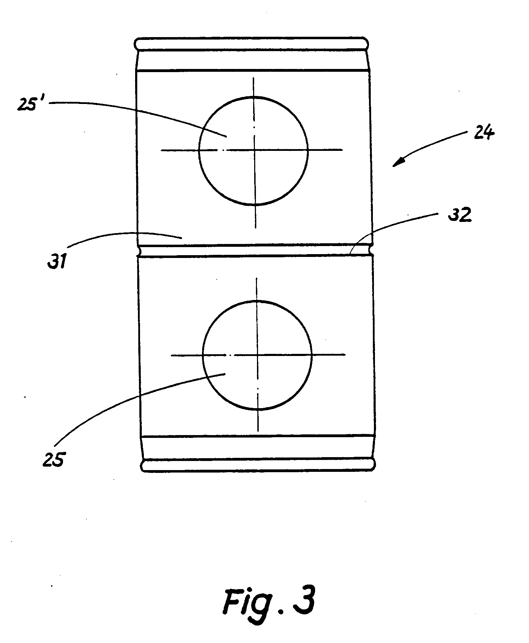

Wenn der Paßzapfen 24 in einem der Teile 3, 4 unverlierbar gehaltert werden soll, kann an dieser Stelle zwischen der Paßbohrung 7 oder 8 und dem Paßzapfen 24 ein Untermaß vorliegen, das je nach dem Durchmesser der Paßbohrungen 7 oder 8 zwischen 0 und 15 µm liegen kann. Dieses Untermaß kann entweder dadurch entstehen, daß bei einem durchgehend zylindrischen Paßzapfen 24 die entsprechende Paßbohrung 7, 8 das gewünschte Untermaß aufweist oder indem der Paßzapfen 24 an dem in der jeweiligen Paßbohrung 7, 8 steckenden Ende ein entsprechendes Übermaß aufweist. Der Paßzapfen 24 ist dann zwar über seine gesamte Länge noch zylindrisch, doch weist er eine stufenförmige Durchmesseränderung auf, die etwa in der Mitte zwischen den beiden Querbohrungen 25, 25ʹ liegt. Die beiden entstehenden Abschnitte sind dann, wie Fig. 3 zeigt, vorzugsweise durch eine ausgerundete Hohlkehle 32 voneinander getrennt, die sich im zusammengesteckten Zustand der Kupplungsanordnung im Bereich der beiden Anlageflächen 5, 6 befindet.

Besteht zwischen beiden Paßbohrungen 7 und 8 gegenüber dem Paßzapfen 24 ein Untermaß, ergeben sich sehr gute Zentrierungsverhältnisse beim Zusammenstecken der Kupplungsanordnung 1, die dann aber bevorzugt nur herstellungsseitig zusammengesetzt wird und nicht dazu vorgesehen ist, häufig zerlegt und wieder zusammengesetzt zu werden.

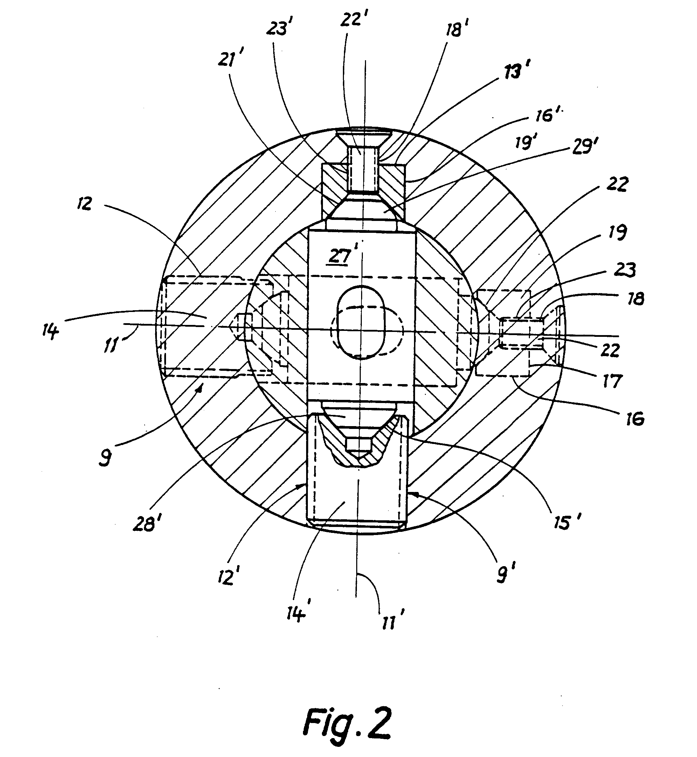

Abgesehen von der in den Fig. 1 und 2 gezeigten Ausführungsform des Paßzapfens 24 kann auch der in Fig. 3 gezeigte Paßzapfen 31 verwendet werden, bei dem die beiden Querbohrungen 25 und 25ʹ achsparallel zueinander ausgeführt sind. Der Paßzapfen 31 kommt zur Anwendung, wenn es weniger darum geht, einen möglichst gleichmäßigen Verlauf der Biegesteifigkeit zu erzeugen als vielmehr darum, einen bestimmten Azimutwinkel zwischen den beiden miteinander zu verbindenden Teilen 3 und 4 herzustellen, der von dem Azimutwinkel abweicht, der durch den Paßzapfen 24 erreicht werden kann. Je nach dem, unter welchem Winkel zueinander die beiden Querbohrungen 25 und 25ʹ zueinander, bezogen auf die Drehachse 2 hergestellt sind, lassen sich beliebige Azimutwinkel zwischen den beiden Teilen 3 und 4 erzeugen.

Wenn über die Kupplungsanordnung 1 noch ein zu der Drehachse 2 konzentrisches Betätigungsorgan geführt werden soll, kann ohne weiteres in dem Paßbolzen 24 sowie in den beiden Spannbolzen 27 und 27ʹ noch jeweils eine entsprechende Durchgangsöffnung 33 bzw. 34 angebracht werden. Die Öffnungen 33 in den Spannbolzen 27 und 27ʹ sind dabei vorzugsweise als Langlöcher ausgeführt, damit das Betätigungsglied sowohl in der verspannten Stellung als auch in derjenigen Stellung hindurchgeführt werden kann, in der der Spannbolzen 27 bzw. 27ʹ mit seinen beiden Fortsätzen 28, 29 gegenüber der Außenumfangsfläche des Paßbolzens 24 zurückspringt.

Außerdem ist es möglich, die Spannbolzen 27 und 27ʹ unverlierbar in den zugehörigen Querbohrungen 25, 25ʹ zu haltern, indem in der Außenumfangsfläche des Spannbolzens 27, 27ʹ eine längliche ovale und an den Rändern geschlossene Nut 35 eingearbeitet ist, die sich parallel zu der Längsachse 26, 26ʹ des Spannbolzens 27, 27ʹ erstreckt. In dieser Nut 35 steckt gleitfähig ein Stift 36, der in einer entsprechenden Bohrung des Paßzapfens 24 mit Preßsitz eingesteckt ist. Der maximale Verschiebehub des Spannbolzens 27, 27ʹ wird dann durch die Länge und die Lage der Nut 35 im Zusammenwirken mit dem Stift 36 festgelegt.

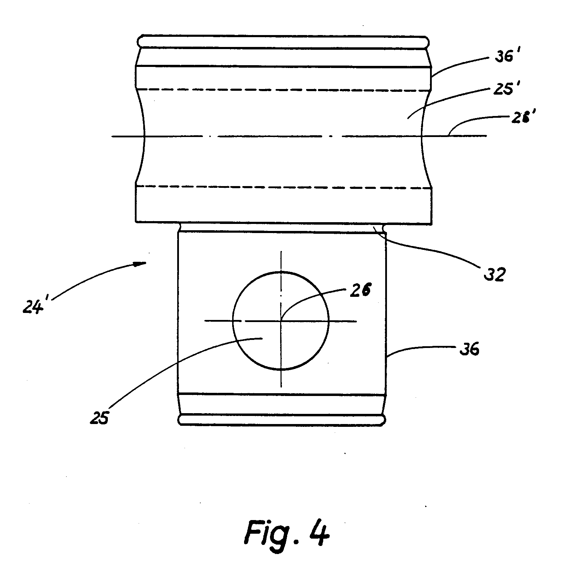

Mit der oben erläuterten Kupplungsanordnung 1 ist es auch möglich, Teile 3, 4 miteinander zu verbinden, deren Paßbohrungen 7, 8 einen stark abweichenden Durchmesser voneinander aufweisen. In diesem Falle kommt der in Fig. 4 gezeigte Paßbolzen 24ʹ zur Anwendung, der etwa auf halber Länge zwischen seinen beiden Paßbohrungen 25, 25ʹ einen Durchmessersprung aufweist, so daß zwei zueinander koaxiale zylindrische Abschnitte 37, 37ʹ entstehen, die in ihrem Durchmesser an den Durchmesser der jeweiligen Paßbohrung 7, 8 angepaßt sind.

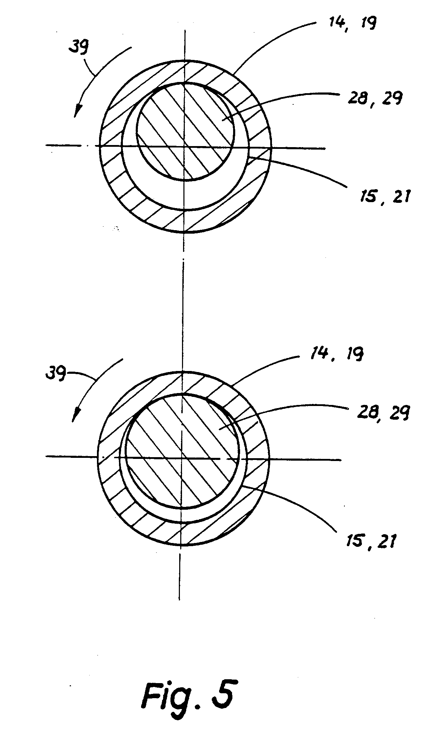

Durch Variation des Abstandes der Längsachsen 26, 26ʹ der Querbohrungen 25, 25ʹ gegenüber dem Abstand der Achsen 11, 11ʹ der Querbohrungen 9, 9ʹ in den beiden Teilen 3, 4 läßt sich der reversible Drehschlupf einstellen, den die beiden Teile 3, 4 gegeneinander unter Belastung zeigen. Zur Erläuterung dieses Zusammenhangs ist auf Fig. 5 Bezug genommen. Diese Figur zeigt zwei stark schematisierte Schnitte in einer Ebene, die senkrecht die Achsen 26 bzw. 11 schneidet und an derjenigen Stelle verläuft, an der der Fortsatz 28 bzw. 29 des Spannbolzens 27 die zugehörige Kegelpfanne 15 bzw. 21 in dem entsprechenden Widerlager 14, 19 berührt.

Bei einer großen Abstandsdifferenz werden bei dem als letzten angezogenen Spannbolzen, beispielsweise dem Spannbolzen 27, die Fortsätze 28, 29 nur ein kleines Stück in die zugehörigen Kegelpfannen 15, 21 eindringen, wie dies in Fig. 5 oben schematisch veranschaulicht ist. Ohne Drehmomentbelastung der beiden Teile 3 und 4 gegeneinander wird dieser Anlagepunkt den beiden Anlageflächen 5, 6 unmittelbar benachbart sein. Tritt an den beiden Teilen 3 und 4 ein Drehmoment auf, das bestrebt ist, die Teile 3 und 4 bezüglich der Drehachse 2 gegeneinander zu verdrehen, so wird der Berührungspunkt zwischen den Kegelpfannen15, 21 und den Fortsätzen 28, 29 in Verdrehrichtung seitlich auszuwandern versuchen, sobald die Haftreibung zwischen den beiden aneinander anstoßenden Anlageflächen 5, 6 überwunden ist. Der Berührungspunkt zwischen den Kegelpfannen 15, 21 und den Fortsätzen 28, 29 wird beispielsweise in Richtung eines Pfeiles 39 auszuwandern versuchen. Da dieses Auswandern gleichzeitig eine Vergrößerung des Abstandes der Angriffspunkte bedeutet, mit denen die beiden Spannbolzen 27, 27ʹ in den beiden Teilen 3, 4 verankert sind, entsteht eine zunehmende Vorspannkraft, die die beiden Anlageflächen 5, 6 aufeinander preßt. Die Extremstellung liegt vor, wenn die Anlagestelle zwischen den Fortsätzen 28, 29 und den Kegelpfannen 14, 19 gegenüber der in Fig. 5 oben gezeigten Stellung um 90° nach der Seite ausgewandert ist. Da aufgrund der Wahl des Achsabstandes der Querbohrungen 25, 25ʹ gegenüber dem Achsabstand der Querbohrungen 9, 9ʹ die Fortsätze 28, 29 nur wenig in die Kegelpfannen 14, 19 eindringen, sind vergleichsweise große Drehbewegungen zwischen den Teilen 5, 6 möglich, ehe die Spannbolzen 27, 27ʹ infolge der seitlichen Anlage in den zugehörigen Kegelpfannen 15, 21 eine weitere Drehung blockieren. Ist hingegen die Abstandsdifferenz zwischen den Achsen 26, 26ʹ und den Achsen 11, 11ʹ kleiner als beim vorher erwähnten Beispiel, werden die Fortsätze 28, 29 tiefer in die zugehörigen Kegelpfannen 15, 21 eindringen können. Die Durchmesserdifferenz der Kreise in der Berührungsebene, der die Kegelpfanne 15, 21 definiert gegenüber dem Kreis, die die Schnittebene an dem Fortsatz 28, 29 erzeugt, wird dementsprechend ebenfalls kleiner sein als beim vorerwähnten Beispiel. Diese andere Durchmesserdifferenz ist in Fig. 5 unten schematisch veranschaulicht. Der Fortsatz 28, 29 hat in der Ebene, die einerseits die Längsachse 26 rechtwinklig schneidet und die andererseits den Berührungspunkt zwischen dem entsprechenden Fortsatz 28, 29 mit der Kegelpfanne 15, 21 enthält, ein geringeres Spiel in Umfangsrichtung, bezogen auf auf die Achse 2, als beim vorherigen Beispiel. Folglich wird bei einem gegenüber dem vorigen Beispiel kleineren Drehmoment zwischen den Teilen 3 und 4 die Berührungsstelle aus der gezeigten Lage in Richtung des Pfeils 39 um 90° ausgelenkt sein als dies beim vorherigen Ausführungsbeispiel erforderlich ist. Deswegen wird bereits bei einem kleineren Drehmoment eine formschlüssige Verriegelung der Drehbewegung der Teile 3, 4 gegeneinander auftreten als nach der Situation, die in Fig. 5 oben gezeigt ist.

Durch entsprechende Auswahl des Paßzapfens 24 läßt sich deswegen das Drehschlupfverhalten der Kupplungsanordnung 1 steuern. Ist die Abstandsdifferenz der Querbohrung im Paßzapfen 24 gegenüber den Querbohrungen in den Teilen 3, 4 klein, entsteht eine Verbindung mit verhältnismäßig kleinem reversiblen Drehschlupf, verglichen mit einer Anordnung, bei der die Abstandsdifferenz größer ist. In jedem Falle kehrt bei Entlastung der Kupplungsanordnung 1 der Spannbolzen 27 in den Widerlagern 14, 19 in die in Fig. 5 gezeigten Stellungen reversibel zurück. Die Kupplungsanordnung 1 ist auf diese Weise programmierbar nachgiebig.

## Patentansprüche

1. Kupplungsanordnung zum drehfesten und biegesteifen Verbinden von miteinander zu kuppelnden, eine gemeinsame Achse aufweisenden Teilen, wie Wellen und Werkzeugen miteinander bzw. untereinander, mit einer in dem einen Teil vorgesehenen, zu der Achse konzentrischen, zylindrischen Paßbohrung, einer die Paßbohrung umgebenden Anlagefläche für das andere Teil, die in einer zu der Achse senkrechten Ebene liegt, mit einer die Paßbohrung schneidenden, von dieser in zwei Abschnitte aufgeteilten und in dem einen Teil vorgesehenen Querbohrung, deren Längsachse die Achse rechtwinklig schneidet, in deren einem Abschnitt ein Widerlagerglied und in deren anderem Abschnitt ein Vorspannglied sitzt, mit einem in die Paßbohrung einführbaren zylindrischen Paßzapfen, der eine Querbohrung mit einem darin angeordneten Spannelement aufweist, das mit dem Widerlagerglied sowie dem Vorspannglied zusammenwirkt, und mit einer an dem anderen Teil vorgesehenen Anlagefläche, die in einer zu der Achse senkrechten Ebene liegt und bei zusammengespannten Teilen an der Anlagefläche des anderen Teiles anliegt, dadurch gekennzeichnet, daß auch das andere Teil (3, 4) eine zu der Achse (2) konzentrische zylindrische Paßbohrung (7, 8) sowie eine die Paßbohrung (7, 8) schneidende und von dieser in zwei Abschnitte (12, 13, 12ʹ, 13ʹ) aufgeteilte Querbohrung (9, 9ʹ) aufweist, deren Achse (26, 26ʹ) die Achse (2) rechtwinklig schneidet und die in einem Abschnitt (13, 13ʹ) ein Widerlagerglied (19, 19ʹ) und in dem anderen Abschnitt (12, 12ʹ) ein Vorspannglied (14, 14ʹ) enthält, daß der Paßzapfen (24, 24ʹ, 31) eine weitere die Achse (2) rechtwinklig schneidende Querbohrung (25, 25ʹ) mit einem darin angeordneten weiteren Spannelement (27, 27ʹ) enthält, das mit dem anderen Widerlagerglied (19, 19ʹ) und dem anderen Vorspannglied (14, 14ʹ) der weiteren Paßbohrung (7, 8) zusammenwirkt, und daß bei aneinander anliegenden Anlageflächen (5, 6) der beiden Teile (3, 4) der Abstand der Achsen (11, 11ʹ) der beiden Querbohrungen (9, 9ʹ) in den beiden Teilen (3, 4) größer ist als der Abstand der Achsen (26, 26ʹ) der beiden Querbohrungen (25, 25ʹ) des Paßzapfens (24, 24ʹ, 31).

2. Kupplungsanordnung nach Anspruch 1, dadurch gekennzeichnet, daß sich die Projektion der Achsen (26, 26ʹ) der Querbohrungen (25, 25ʹ) des Paßzapfens (24, 24ʹ, 31) in einer zu der Achse (2) senkrechten Ebene unter einem Winkel zwischen 0° und 90° schneiden.

3. Kupplungsanordnung nach Anspruch 1, dadurch gekennzeichnet, daß sich die Projektion der Achsen (26, 26ʹ) der Querbohrungen (25, 25ʹ) des Paßzapfens (24, 24ʹ, 31) in einer zu der Achse (2) senkrechten Ebene im rechten Winkel schneiden.

4. Kupplungsanordnung nach Anspruch 1, dadurch gekennzeichnet, daß der Paßzapfen (24, 24ʹ, 31) zumindest in einem beide Querbohrungen (25, 25ʹ) enthaltenden Längsabschnitt konstanten Durchmesser aufweist.

5. Kupplungsanordnung nach Anspruch 1, dadurch gekennzeichnet, daß der Paßzapfen (24ʹ, 31) in zwei zueinander koaxiale zylindrische Abschnitte (36, 36ʹ) aufgeteilt ist, die unterschiedlichen Durchmesser aufweisen und von denen jeder eine Querbohrung (25, 25ʹ) enthält.

6. Kupplungsanordnung nach Anspruch 1 oder 5, dadurch gekennzeichnet, daß der Paßzapfen (24, 24ʹ, 31) in der Paßbohrung (7, 8) von zumindest einem Teil (3, 4) mit Haftsitz eingesteckt ist.

7. Kupplungsanordnung nach Anspruch 1 oder 5, dadurch gekennzeichnet, daß der Paßzapfen (24, 24ʹ, 31) in der Paßbohrung (7, 8) von lediglich einem Teil (3, 4) mit Haftsitz eingesteckt ist.

8. Kupplungsanordnung nach Anspruch 6 oder 7, dadurch gekennzeichnet, daß die Maßdifferenz für den Haftsitz zwischen 0 µm bis 15 µm beträgt.

9. Kupplungsanordnung nach Anspruch 1, dadurch gekennzeichnet, daß der Abstand der Achse (11) der Querbohrung (9) in dem einen Teil (4) von der zugehörigen Anlagefläche (6) gleich dem Abstand der Achse (11ʹ) der Querbohrung (9ʹ) in dem anderen Teil (3) von der zugehörigen Anlagefläche (5) ist.

10. Kupplungsanordnung nach Anspruch 1, dadurch gekennzeichnet, daß beide Spannelemente (27, 27ʹ) gleich sind.

11. Kupplungsanordnung nach Anspruch 1, dadurch gekennzeichnet, daß beide Spannelemente (27, 27ʹ) eine zu ihrer Längsachse (26, 26ʹ) quer verlaufende Durchgangsöffnung (33, 33ʹ) und der Paßbolzen (24) eine koaxiale Längsbohrung (33) enthalten.

12. Kupplungsanordnung nach Anspruch 1, dadurch gekennzeichnet, daß wenigstens eines der Spannelemente (27, 27ʹ) in der jeweiligen Querbohrung (25, 25ʹ) unverlierbar gehaltert ist.

13. Kupplungsanordnung nach Anspruch 12, dadurch gekennzeichnet, daß die Spannelemente (27, 27ʹ) in der jeweiligen Querbohrung (25, 25ʹ) gegen Verdrehen bezüglich ihrer Längsachse (26, 26ʹ) gesichert sind.

14. Kupplungsanordnung nach Anspruch 1, dadurch gekennzeichnet, daß der bei einem Drehmoment bezüglich der Achse (2) zwischen den beiden Teilen (3, 4) auftretende reversible Drehschlupf vorgebbar ist.

15. Kupplungsanordnung nach Anspruch 14, dadurch gekennzeichnet, daß zur Veränderung des Drehschlupfes Paßzapfen (24, 24ʹ, 31) vorgesehen sind, die einem dem vorgegebenen Drehschlupf entsprechenden Abstand zwischen den Längsachsen (26, 26ʹ) der Querbohrungen (25, 25ʹ) aufweisen, der für einen großen Drehschlupf um einen größeren Betrag kleiner ist als der Abstand der Achsen (11, 11ʹ) der Querbohrungen (9, 9ʹ) in den beiden Teilen (3, 4) als im Falle eines kleineren Drehschlupfes.

## Claims

1. Coupling arrangement for the rotation- and bend-resistant connection or interconnection of parts with a common axis which are to be coupled to one another, such as shafts and tools, having a cylindrical hole provided in one part so as to be concentric to the axis, a contact surface for the other part, surrounding said hole and lying in a plane vertical to the axis, also having a transverse hole provided in the one part, which intersects said cylindrical hole and is divided by it into two sections, its longitudinal axis intersecting the axis at right angles, and wherein an abutment member sits in one section and a prestressing member sits in the other, also having a cylindrical pin to fit into said cylindrical hole which has a transverse hole with a tensioning element arranged therein to interact with said abutment member as well as with said prestressing member, and also having a contact surface provided on the other part, which lies in a plane vertical to the axis and abuts the contact surface of the other part when the parts are clamped together, characterised in that the other part (3, 4) also has a cylindrical hole (7, 8) concentric to the axis (2) and a transverse hole (9, 9'), which intersects the cylindrical hole (7, 8), is divided into two sections (12, 13, 12', 13') by it, its axis (26, 26') intersecting the axis (2) at right angles, and which in one section (13, 13') contains an abutment member (19, 19') and in its other section (12, 12') contains a prestressing member (14, 14'); that the mating pin (24, 24', 31) includes a further transverse hole (25, 25') intersecting the axis (2) at right angles with a further tensioning element (27, 27') arranged therein, said tensioning element interacting with the other abutment member (19, 19') and the other prestressing member (14, 14') of the further cylindrical hole (7, 8); and that, when the contact surfaces (5, 6) of the two parts (3, 4) abut one another, the distance between the axes (11, 11') of the two transverse holes (9, 9') in the two parts (3, 4) is greater than the distance between the axes (26, 26') of the two transverse holes (25, 25') of the pin (24, 24', 31).

2. Coupling arrangement according to Claim 1, characterised in that the projected axes (26, 26') of the transverse holes (25, 25') of the pin (24, 24', 31) intersect at an angle of between 0° and 90° in a plane perpendicular to the axis (2).

3. Coupling arrangement according to Claim 1, characterised in that the projected axes (26, 26') of the transverse holes (25, 25') of the pin (24, 24', 31) intersect at right angles in a plane perpendicular to the axis (2).

4. Coupling arrangement according to Claim 1, characterised in that the pin (24, 24', 31) has a constant diameter in at least one longitudinal section containing the two transverse holes (25, 25').

5. Coupling arrangement according to Claim 1, characterised in that the pin (24', 31) is divided into two coaxially arranged cylindrical sections (36, 36') of different diameter, each of which containing a transverse hole (25, 25').

6. Coupling arrangement according to Claim 1 or 5, characterised in that the pin (24, 24', 31) is inserted in the cylindrical hole (7, 8) of at least one part (3, 4) to form a bond fit.

7. Coupling arrangement according to Claim 1 or 5, characterised in that the pin (24, 24', 31) is inserted in the cylindrical hole (7, 8) of only one part (3, 4) to form a bond fit.

8. Coupling arrangement according to Claim 6 or 7, characterised in that the size tolerance for the bond fit lies between 0 µm and 15 µm.

9. Coupling arrangement according to Claim 1, characterised in that the distance of the axis (11) of the transverse hole (9) in one part (4) from the corresponding contact surface (6) is equal to the distance of the axis (11') of the transverse hole (9') in the other part (3) from the corresponding contact surface (5).

10. Coupling arrangement according to Claim 1, characterised in that the two tensioning elements (27, 27') are the same.

11. Coupling arrangement according to Claim 1, characterised in that the two tensioning elements (27, 27') contain a through hole (33, 33') running transversely to their longitudinal axis (26, 26') and the mating bolt (24) contains a coaxial longitudinal hole (33).

12. Coupling arrangement according to Claim 1, characterised in that at least one of the tensioning elements (27, 27') is undetachably held in the corresponding transverse hole (25, 25').

13. Coupling arrangement according to Claim 12, characterised in that the tensioning elements (27, 27') in the respective transverse hole (25, 25') are secured to prevent them from rotating in relation to their longitudinal axis (26, 26').

14. Coupling arrangement according to Claim 1, characterised in that the reversible rotational slip occurring between the two parts (3, 4) where there is torque in relation to the axis (2) may be preset.

15. Coupling arrangement according to Claim 14, characterised in that, in order to change the rotational slip, mating pins (24, 24', 31) are provided, wherein the distance between the longitudinal axes (26, 26') of the transverse holes (25, 25') corresponding to the preset rotational slip is smaller than the distance between the axes (11, 11') of the transverse holes (9, 9') in the two parts (3, 4) by a greater dimension in the case of high rotational slip than is the case with a lower rotational slip.

## Revendications

1. Dispositif d'accouplement destiné à coupler entre eux, de manière rigide en torsion et en flexion, des éléments à relier entre eux qui présentent un axe géométrique commun, tels que des arbres et des outils, dispositif comportant un alésage calibré cylindrique, concentrique avec l'axe géométrique, aménagé dans l'un des éléments, une surface d'appui pour l'autre élément, laquelle surface entoure l'alésage calibré et est située dans un plan perpendiculaire à l'axe géométrique, un perçage transversal qui est prévu dans l'un des éléments, est sécant avec l'alésage calibré et est divisé en deux parties par celui-ci et dont l'axe longitudinal coupe l'axe géométrique à angle droit, trou dans une partie duquel est monté un organe formant butée et dans l'autre partie duquel est monté un organe d'application de précontrainte, un axe d'assemblage cylindrique qui peut être introduit dans l'alésage calibré et présente un perçage transversal avec, à l'intérieur de celui-ci, un organe de serrage qui coopère avec l'organe formant butée et l'organe d'application de précontrainte, une surface d'appui prévue sur l'autre élément, qui est située dans un plan perpendiculaire à l'axe géométrique et qui, lorsque les éléments sont serrés entre eux, est appliquée contre la surface d'appui de l'autre élément, caractérisé par le fait que l'autre élément (3, 4) présente lui aussi un alésage calibré (7, 8) cylindrique concentrique à l'axe géométrique (2) et un perçage transversal (9, 9') qui coupe l'alésage calibré (7, 8) et est divisé en deux parties (12, 13, 12', 13') par ce dernier, dont l'axe géométrique (26, 26') coupe l'axe géométrique (2) à angle droit et qui, dans une partie (13, 13'), présente une butée (19, 19') et, dans l'autre partie (12, 12'), un organe d'application de précontrainte (14, 14'), par le fait que l'axe d'assemblage (24, 24', 31) comporte un autre perçage transversal (25, 25') coupant l'axe géométrique (2) à angle droit avec, à l'intérieur de celui-ci, un autre élément de serrage (27, 27') qui coopère avec l'autre organe formant butée (19, 19') et l'autre organe d'application de précontrainte de l'alésage calibré (7, 8) et par le fait que, lorsque les surfaces d'appui (5, 6) des deux éléments (3, 4) sont appliquées l'une contre l'autre, la distance entre les axes géométriques (11, 11') des deux perçages transversaux (9, 9') dans les deux éléments (3, 4) est supérieure à la distance entre les axes géométriques (26, 26') des deux perçages transversaux (25, 25') de l'axe d'assemblage (24, 24', 31).

2. Dispositif d'accouplement selon revendication 1, caractérisé par le fait que les projections des axes géométriques (26, 26') des perçages transversaux (25, 25') de l'axe d'assemblage (24, 24', 31) se coupent avec un angle compris entre 0° et 90° à l'intérieur d'un plan perpendiculaire à l'axe géométrique (2).

3. Dispositif d'accouplement selon revendication 1, caractérisé par le fait que les projections des axes géométriques (26, 26') des perçages transversaux (25, 25') de l'axe d'assemblage (24, 24', 31) se coupent à angle droit à l'intérieur d'un plan perpendiculaire à l'axe géométrique (2).

4. Dispositif d'accouplement selon revendication 1, caractérisé par le fait que l'axe d'assemblage (24, 24', 31) a un diamètre constant au moins dans une partie longitudinale contenant les deux perçages transversaux (25, 25').

5. Dispositif d'accouplement selon revendication 1, caractérisé par le fait que l'axe d'assemblage (24', 31) est divisé en deux parties (36, 36') cylindriques coaxiales qui ont des diamètres différents et comportent chacune un perçage transversal (25, 25').

6. Dispositif d'accouplement selon revendication 1 ou 5, caractérisé par le fait que l'axe d'assemblage (24, 24', 31) est monté avec ajustement serré dans l'alésage calibré (7, 8) d'au moins un élément (3, 4).

7. Dispositif d'accouplement selon revendication 1 ou 5, caractérisé par le fait que l'axe d'assemblage (24, 24', 31) est monté avec ajustement serré dans l'alésage calibré (7, 8) d'un seul élément (3, 4).

8. Dispositif d'accouplement selon revendication 6 ou 7, caractérisé par le fait que la différence de cote pour l'ajustement serré est comprise entre 0 µm et 15 µm.

9. Dispositif d'accouplement selon revendication 1, caractérisé par le fait que la distance entre l'axe géométrique (11) du perçage transversal (9) dans l'un (4) des éléments par rapport à la surface d'appui (6) correspondante est égale à la distance de l'axe géométrique (11') du perçage transversal (9') dans l'autre élément (3) par rapport à la surface d'appui (5) correspondante.

10. Dispositif d'accouplement selon revendication 1, caractérisé par le fait que les deux éléments de serrage (27, 27') sont identiques.

11. Dispositif d'accouplement selon revendication 1, caractérisé par le fait que les deux éléments de serrage (27, 27') comportent un passage (33, 33') perpendiculaire à leur axe longitudinal (26, 26') et que l'axe d'assemblage (24) comporte un perçage longitudinal (33) coaxial.

12. Dispositif d'accouplement selon revendication 1, caractérisé par le fait que l'un au moins des éléments de serrage (27, 27') est tenu de manière imperdable dans le perçage transversal (25, 25') correspondant.

13. Dispositif d'accouplement selon revendication 12, caractérisé par le fait que les éléments de serrage (27, 27') sont immobilisés en rotation par rapport à leur axe longitudinal (26, 26') dans le perçage transversal (25, 25') correspondant.

14. Dispositif d'accouplement selon revendication 1, caractérisé par le fait que le glissement en rotation réversible qui se produit entre les deux éléments en présence d'un couple suivant à l'axe géométrique (2) peut être prédéterminé.

15. Dispositif d'accouplement selon revendication 14, caractérisé par le fait que, pour modifier le glissement en rotation, il est prévu des axes d'assemblage (24, 24', 31) avec une distance entre les axes longitudinaux (26, 26') qui correspond au glissement prédéterminé, laquelle distance, pour un glissement important, est inférieure d'une valeur plus forte que dans le cas d'un faible glissement à la distance entre les axes géométriques (11, 11') des perçages transversaux (9, 9') dans les deux éléments (3, 4).
